(19) **Europäisches Patentamt European Patent Office Office européen des brevets**

(11) **EP 2 363 967 A1**

(12) **EUROPEAN PATENT APPLICATION**
published in accordance with Art. 153(4) EPC

(43) Date of publication:
**07.09.2011 Bulletin 2011/36**

(21) Application number: **09821505.6**

(22) Date of filing: **20.10.2009**

(51) Int Cl.:
***H04B 17/00*** (2006.01)

(86) International application number:
**PCT/CN2009/001162**

(87) International publication number:
**WO 2010/045784 (29.04.2010 Gazette 2010/17)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.10.2008 CN 200810224370**

(71) Applicant: **China Academy of Telecommunications Technology Haidian District Beijing 100191 (CN)**

(72) Inventors:
• **KANG, Shaoli**
  **Beijing 100083 (CN)**
• **SUN, Changguo**
  **Beijing 100083 (CN)**
• **WU, Kewei**
  **Beijing 100083 (CN)**

(74) Representative: **Leszczynski, André et al NONY & ASSOCIES 3, rue de Penthièvre 75008 Paris (FR)**

(54) **METHOD AND DEVICE FOR DETERMINING MOBILE COMMUNICATION INTERFERENCE SOURCE**

(57) A method and device for determining mobile communication interference source, the method includes: the interfered base station is determined; the time point at the interfered frequency point of the base station sector is determined according to the interference signal code power of the base station; the interference signal of the base station is determined at the time point; and the direction of the interference source is calculated according to the direction of arrival (DOA) estimate of the interference signal. The method and device enable locating interference source rapidly and strengthen the utilization value of the small interval smart antenna communication system.

```
┌─────────────────────────────────────────┐
│ Determine a first base station subject   │─ 101
│ to interference                          │
└─────────────────────────────────────────┘
                    ↓
┌─────────────────────────────────────────┐
│ Determine from ISCP of the first base    │─ 102
│ station a first time point at a frequency│
│ point at which a sector of the first     │
│ base station is subject to interference  │
└─────────────────────────────────────────┘
                    ↓
┌─────────────────────────────────────────┐
│ Determine a first interference signal    │─ 103
│ of the first base station at the first   │
│ time point                               │
└─────────────────────────────────────────┘
                    ↓
┌─────────────────────────────────────────┐
│ Calculate from the first interference    │─ 104
│ signal a first direction of an           │
│ interference source through a DOA        │
│ estimation                               │
└─────────────────────────────────────────┘
```

Fig.1

EP 2 363 967 A1

**Description**

**Field of the Invention**

The present invention relates to the field of mobile communication and particularly to a method and device for determining an interference source of mobile communication.

**Background of the Invention**

A mobile communication system tends to be subject to various types of interference, e.g., interference at the same frequency inside the system and interference from outside the system. Some interference may be strong enough to render a certain station or even an extent of stations inoperative so that a User Equipment (UE) can not gain an access to the station(s), which may be very execrable, Accordingly, if a direction of arrival of interference and a position of interference can be located rapidly, it is helpful for a network maintainer to remove interference rapidly to thereby bring a network subject to interference back to normality.

In the prior art, it is typical to investigate and remove interference by analyzing a feature of an area subject to interference or utilizing a specialized test instrument in aid of making an analysis and judgment, and an apparent drawback thereof is that the investigation and removal process is rather blind and complex and usually consumes a considerable effort or a long period of time to investigate and remove interference.

**Summary of the Invention**

The invention provides a method and device for determining an interference source of mobile communication to address the problem in the prior art of being difficult to determine the interference source.

An embodiment of the invention provides a method for determining an interference source of mobile communication, which includes:

determining a first base station subject to interference;

determining, from interference signal code power of the first base station, a frequency point at which a sector of the first base station is subject to interference and a first time point subject to interference at the frequency point;

determining a first interference signal of the first base station at the first time point; and

calculating, from the first interference signal, a first direction of the interference source through a Direction of Arrival, DOA, estimation.

Preferably, the method further includes:

determining a second base station subject to interference;

determining, from interference signal code power of the second base station, a frequency point at which a sector of the second base station is subject to interference and a second time point subject to interference at the frequency point;

determining a second interference signal of the second base station at the second time point;

calculating, from the second interference signal, a second direction of the interference source through the DOA estimation; and

determining a position of the interference source from the first direction and the second direction and positions of the base stations,

Preferably, the method further includes:

determining a set of base stations subject to interference, the number of which is larger than 2, including the first base station;

determining, from interference signal code power of each of the set of base stations, a frequency point at which a sector of the base station is subject to interference and a time point subject to interference at the frequency point;

determining an interference signal of the base station at the time point;

calculating, from the interference signal through the DOA estimation, a direction of the interference source determined at the base station; and

determining a position of the interference source from directions of the interference source determined at the respective base stations and positions of the base stations.

Preferably, the time point is a time point at a frequency point subject to the strongest interference in the sector of the base station.

Preferably, calculating, from the interference signal, a direction of the interference source through the DOA estimation includes:

determining an interference space covariance matrix of the interference signal from the interference signal;

calculating a direction of arrival of the interference signal from the interference space covariance matrix through the DOA estimation; and

determining the direction of arrival as the direction of the interference source.

Preferably, calculating, from the interference signal, a direction of the interference, source through the BOA estimation includes:

making a statistic of interference space covariance matrixes of the interference signal at a plurality of time points in a period of time by calculating the interference space covariance matrixes from the interference signal;

averaging the interference space covariance matrixes;

calculating a direction of arrival of the interference signal from the average of the interference space covariance matrixes through the DOA estimation; and

determining the direction of arrival as the direction of the interference source.

Preferably, calculating from the interference signal a direction of the interference source through the DOA estimation includes:

making a statistic of interference space covariance matrixes of the interference, signal at a plurality of time points in a period of time by calculating the interference space covariance matrixes from the interference signal;

calculating a plurality of directions of arrival of the interference signal from the interference space covariance matrixes in the period of time through the DOA estimation respectively;

averaging the directions of arrival of the interference signal; and

determining the average as the direction of the interference source.

Preferably, the method further includes, prior to determining the interference signal of the base station at the time point,

determining whether there is an accessing service at the time point; and

upon determining that there is no accessing service at the time point, determining the interference signal of the base station at the time point; or upon determining that there is an accessing service at the time point, awaiting exiting of the service or forcing the service to exit and then determining the interference signal of the base station at the time point.

Preferably, determining the interference signal of the base station at the time point further includes:

performing a channel estimation on a received signal upon determining that there is an accessing service at the time point;

post-processing a result of the channel estimation for determining part of the result of the channel estimation belonging to a user and the other part of the result of the channel estimation belonging to the interference signal; and

calculating an interference space covariance matrix from the other part of the result of the channel estimation belonging to the interference signal.

An embodiment of the invention provides a device for determining an interference source of mobile communication, which includes:

a base station determination module configured to determine a first base station subject to interference;

a time point determination module configured to determine from interference signal code power of the first base station a frequency point at which a sector of the first base station is subject to interference and a first time point subject to interference at the frequency point;

an interference signal determination module configured to determine a first interference signal of the first base station at the first time point; and

a direction determination module configured to calculate from the first interference signal a first direction of the interference source through a Direction Of Arrival, DOA, estimation.

Preferably, the base station determination module is further configured to determine a second base station subject to interference;

the time point determination module is further configured to determine from interference signal code power of the second base station a frequency point at which a sector of the second base station is subject to interference and a second time point subject to interference at the frequency point;

the interference, signal determination module is further configured to determine a second interference signal of the second base station at the second time point;

the direction determination module is further configured to calculate from the second interference signal a second direction of the interference source through the DOA estimation; and

the device further includes:

a position determination module configured to determine a position of the interference source from the first direction and the second direction and positions of the base stations.

Preferably, the base station determination module is further configured to determine a set of base stations subject to interference, the number of which is larger than 2, including the first base station;

the time point determination module is further configured to determine from interference signal code power of each of the set of base stations a frequency point at which a sector of the base station is subject to interference and a time point subject to interference at the frequency point;

the interference signal determination module is further configured to determine an interference signal of the base station at the time point;

the direction determination module is further configured to calculate from the interference signal through the DOA estimation a direction of the interference source determined at the base station; and

the position determination module is further configured to determine a position of the interference source from directions of the interference source determined at the respective base stations and positions of the base stations,

Preferably, the time point determination module is further configured to determine a time point at a frequency point subject to the strongest interference at the sector of the base station as the time point at the frequency point subject to interference.

Preferably, the direction determination module is further configured to determine an interference space covariance matrix of the interference signal from the interference signal and then calculate a direction of arrival of the interference signal from the interference space covariance matrix through the DOA estimation, and to determine the direction of arrival as a direction of the interference source,

Preferably, the direction determination module is further configured to make a statistic of interference space covariance matrixes of the interference signal at a plurality of time points in a period of time by calculating the interference space covariance matrixes from the interference signal to average the interference space covariance matrixes resulting from the statistic and then calculate a direction of arrival of the interference signal from the average of the interference space covariance matrixes through the DOA estimation, and to determine the direction of arrival as a direction of the interference source.

Preferably, the direction determination module is further configured to make a statistic of interference space covariance matrixes of the interference signal at a plurality of time points in a period of time by calculating the interference space covariance matrixes from the interference signal, to calculate a plurality of directions of arrival of the interference signal from the interference space covariance matrixes in the period of time through the DOA estimation respectively and then average the plurality of directions of arrival of the interference signal, and to determine the average as a direction of the interference source.

Preferably, the device further includes:

a service processing module configured to determine whether there is an accessing service at the time point prior to determining the interference signal of the base station at the time point, and configured, upon determining that there is no accessing service at the time point, to determine the interference signal of the base station at the time point, or upon determining that there is an accessing service at the time point, to await exiting of the service or force the service to exit and then determine the interference signal of the base station at the time point.

Preferably, the interference signal determination module is further configured to perform a channel estimation on a received signal upon determining that there is an accessing service at the time point, to post-process a result of the channel estimation for determining part of the result of the channel estimation belonging to a user and the other part of the result of the channel estimation belonging to the interference signal, and to calculate an interference space covariance matrix from the other part of the result of the channel estimation belonging to the interference signal.

Advantageous effects of the invention are as follows.

In the embodiments of the invention, a frequency point at which a sector of a first base station is subject to interference and a time point subject to interference at the frequency point are determined from interference signal code power of the base station subject to interference, and a direction of an interference source is calculated from the interference signal at the time point through a DOA estimation.

Alike, another direction of the interference source is calculated from an interference signal at a time point of another base station subject to interference through the DOA estimation, so that a position of the interference source can be determined from the two directions.

Alike, a set of base stations subject to interference can be determined, a set of directions of an interference source can be calculated at the set of base stations, and a position of the interference source can be determined from the set of directions of the interference source and positions of the base stations, thereby deriving a more accurate location of the interference source.

Therefore, the method and device according to the embodiments of the invention can be used to locate interference rapidly upon occurrence thereof, thus bringing much convenience to network maintenance and further enhancing a value of utilizing a communication system with intelligent antennas spaced at a small interval.

**Brief Description of the Drawings**

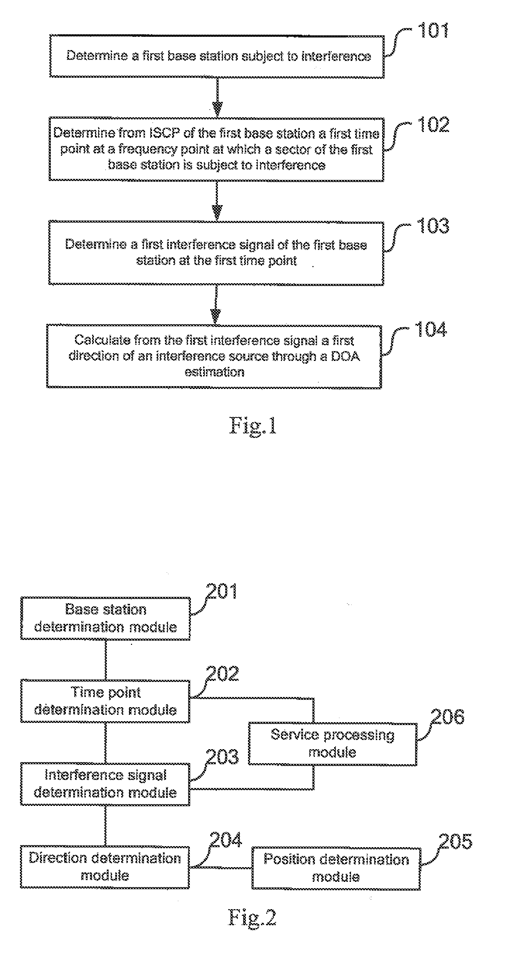

Fig. 1 is a schematic diagram of a flow of a method for determining an interference source of mobile communication according to an embodiment of me invention; and

Fig, 2 is a schematic diagram of a structure of a device for determining an interference source of mobile communication according to an embodiment of the invention.

**Detailed Desertion of the Embodiments**

Embodiments of the invention will be described hereinafter with reference to the drawings.

The invention is embodied based upon a mobile communication system with intelligent antennas spaced at a small interval. In such a system, a direction of arrival of a signal can be judged with the intelligent antennas so that if only a single station is subject to interference, then a direction of arrival of interference can be determined rapidly, or if a plurality of stations are subject to interference, then both a direction of arrival of interference and a position of an interference source can be determined rapidly. As well known to those skilled in the art, an azimuth of a signal can be estimated with intelligent antennas spaced at a small interval, and similarly an azimuth of an interference source can be estimated with intelligent antennas spaced at a small interval. Therefore, a general idea of embodiments of the invention lies in that if only a single station is subject to occurring interference, then a direction of arrival of interference can be estimated in a method for estimating a Direction of Arrival (DOA) of an interference signal, or if a plurality of stations are subject to interference, then a direction of arrival of interference can be estimated for each of the stations, and thereafter a specific position of an interference source can be calculated from longitudinal and latitudinal information of the respective stations in a ray intersection method.

Following the foregoing analysis, an embodiment of the invention provides a method for determining an interference source of mobile communication, which will be described below,

Fig, 1 illustrates a schematic diagram of a flow of a method for determining an interference source of mobile communication according to an embodiment of the invention, which as illustrated may include the following operations 101-104.

The operation 101 is to determine a first base station subject to interference;

The operation 102 is to determine from Interference Signal Code Power (ISCP) of the first base station a frequency point at which a sector of the first base station is subject to interference and a first time point subject to interference at the frequency point;

The operation 103 is to determine a first interference signal of the first base station at the first time point; and

The operation 104 is to calculate from the first interference signal a first direction of an interference source through a DOA estimation.

Firstly, a base station subject to interference is selected in the operation 101, which is referred to a first base station in the embodiment, and after the first base station is determined, information on a sector a frequency point and a time point subject to interference may be determined from reported ISCP in the operation 102 where if a plurality of frequency points or sectors are subject to interference, then a sector, a frequency point and a time point subject to the strongest interference or any time point subject to interference may be selected. Given an interference source, a direction of the interference source can be determined from any time point subject to interference, but a signal at the time point subject to the strongest interference is stronger and therefore is more convenient for processing.

After the time point is determined, the operation 103 may be performed to determine a first interference signal of the first base station at the first time point, and thereafter the operation 104 may be performed on the interference signal to derive an interference space covariance matrix and to perform a DOA estimation, thereby determining a first direction of the interference source.

In an implementation, a direction of the interference source may be calculated from the interference signal in a DOA estimation method in the following three approaches,

1) In a first approach, firstly an interference space covariance matrix of the interference signal is determined from the interference signal;

Then a direction of arrival of the interference signal is calculated from the interference space covariance matrix through the DOA estimation; and

Finally the direction of arrival is determined as a direction of the interference source.

2) In a second approach, a plurality of interference space covariance matrixes are derived through making a statistic for a period of time and then averaged, and a direction of arrival of the interference signal is calculated from the average of the interference space covariance matrixes in the DOA estimation method, possibly in the following specific implementation:

firstly a statistic is made of interference space covariance matrixes of the interference signal at a plurality of time points in a period of time by calculating the interference space covariance matrixes from the interference signal;

then the interference space covariance matrixes are averaged;

next a direction of arrival of the interference signal is calculated from the average of the interference space covariance matrixes through the DOA estimation; and

finally the direction of arrival is determined as a direction of the interference source.

3) In a third approach, Directions Of Arrival are derived through making a statistic for a period of time and then averaged as a direction of arrival of the interference signal, possibly in the following specific implementation:

firstly a statistic is made of interference space covariance matrixes of the interference signal at a plurality of time points in a period of time by calculating the interference space covariance matrixes from the interference signal;

then Directions of Arrival are calculated by performing the DOA estimations on the interference space covariance matrixes in the period of time respectively;

next the Directions Of Arrival are averaged; and

finally the average is determined as a direction of the interference source.

In an implementation, an existing base station is generally provided with an equipment positioning function and therefore can perform related calculation of estimating a DOA in the embodiment of the invention, and of course, a DOA can alternatively be estimated with a separate device capable of calculating. The foregoing second approach can be implemented particularly as the following first to fourth operations.

The first operation is to acquire interference signals of respective antennas, assumed as m($i$, $ka$), $i$ = 1...$N$, $ka$ = 1...$Ka$, where N represents a length of an interference signal, which varies with a real system, and Ka represents the number of antennas, e.g., 6, 8, etc., and then derive interference space covariance matrixes of the interference signals R($i$), $i$ = 1...$N$ :

$$R^{(m,n)}(i) = m(i,m) * m(i,n), i = 1...N, m = 1...Ka, n = 1...Ka$$

Particularly, determination of the interference space covariance matrixes of the interference signals has been described taking the signal lengths of the interference signals and the number of antennas as parameters. Those skilled in the art can readily appreciate that the purpose of the present operation can alternatively be achieved in other possible ways of determining the interference space covariance matrixes of the interference signals.

The second operation is to average the interference space covariance matrixes as R:

$$R^{(m,n)} = \frac{1}{N} \sum_{i=1}^{N} R^{(m,n)}(i)$$

The third operation is to estimate a direction of arrival of the interference signal from the average R of the interference space covariance matrixes as in the existing DOA estimation method.

The fourth operation is to determine the direction of arrival as a direction of the interference source.

A direction of the interference source can thus be determined in the foregoing solution, and furthermore, another direction of the interference source can also be determined at a next base station subject to interference. Thus, a specific position of the interference source can be determined accurately from the two directions. That is, the method for determining an interference source of mobile communication according to an embodiment of the invention may further include:

determining a second base station subject to interference;

determining from Interference Signal Code Power ISCP of the second base station a frequency point at which a sector of the second base station is subject to interference and a second time point subject to interference at the frequency point;

determining a second interference signal of the second base station at the second time point;

calculating from the second interference signal a second direction of the interference source through a DOA estimation; and

determining a position of the interference source from the first direction and the second direction and positions of the base stations.

As in the foregoing embodiment, the second time point may be a time point at a frequency point of a sector with the strongest interference or any time point.

In a specific implementation, a set of base stations also can be involved to position the interference source so as to better accommodate a practical demand and derive a more practical and accurate position of the interference source, and when a set of base stations are involved to position the interference source, the method may further include the following operations:

determining a set of base stations subject to interference, the number of which is larger than 2, including the first base station;

determining from interference signal code power of each of the set of base stations a frequency point at which a sector of the base station is subject to interference and a time point subject to interference at the frequency point;

determining an interference signal of the base station at the time point;

calculating, from the interference signal through a DOA estimation, a direction of the interference source determined at the base station; and

determining a position of the interference source from directions of the interference source determined at the respective base stations and positions of the base stations.

As can be apparent from the foregoing a set of directions of the interference source determined at the respective base stations subject to interference are derived, and apparently the respective directions may be expressed with coordinates, thus a position of the interference source may be determined particularly as follows:

if (x, y) represent coordinates of a position of the interference source, then a set of equations may be derived in polar coordinates from the positions of the base stations and the directions of arrival of interference:

$$y - y_k = \tan(\theta_k)(x - x_k), k = 1...K$$

where $(x_k, y_k)$ represent coordinates of positions of the base stations, $\theta_k$ represents directions of arrival of interference, and K is larger than 2, then the equations may be solved to derive a position of the interference source.

Although a position of the interference source can be determined from two directions, the interference source may be positioned and oriented for a number of times and a plurality of measurement results may be averaged in practice so as to position the interference source more accurately, thereby enhancing reliability of positioning and orienting. That is, if a number N of base stations are subject to interference, then a direction may be derived at each of the base stations, and then a position of the interference source may be determined from positions of the respective base stations and directions of arrival of interference to the respective base stations.

A position of the interference source generally can be determined from just two directions, but inaccurate positioning and even positioning failure may result from the use of only two directions in special circumstances. For example, a position of the interference source on a line connecting two base stations subject to interference can not be derived in the ray intersection method, but this can be obviated if a set of base stations are involved in positioning.

In the foregoing embodiment, when the time point at which a direction of the interference source is analyzed is determined, the embodiment may further include determining whether there is an accessing service at the selected time point, and if so, then exiting of the service may be awaited or the service may be forced to exit. In practice, a UE can not gain an access upon strong interference, therefore, before an interference signal of the base station at the time point is determined, the embodiment may further include:

determining whether there is an accessing service at the time point; and

upon determining that there is no accessing service at the time point, determining the interference signal of the base station at the time point; or upon determining that there is an accessing service at the time point, awaiting exiting of the service or forcing the service to exit and then determining the interference signal of the base station at the time point.

Alternatively, even if there is an accessing service at the selected time point, a direction of arrival of interference may still be estimated, that is, a direction of the interference source may be determined after specific processing in the case that there is an accessing service at the selected time point. An interference signal of the base station at the time point may be determined as follows:

performing a channel estimation on a received signal;

post-processing a result of the channel estimation to determine part of the result of the channel estimation corresponding to a user and the other part of the result of the channel estimation corresponding to the interference signal. In a specific implementation, the part of the result of the channel estimation corresponding to the user may be determined as useful path signals derived from post-processing the result of the channel estimation, and the other part of the result of the channel estimation corresponding to the interference signal may be determined as useless path signals derived from post-processing the result of the channel estimation; and

calculating an interference space covariance matrix from the other part of the result of the channel estimation corresponding to the interference signal; or calculating an interference space covariance matrix from the useless path signals if the part of the result of the channel estimation corresponding to the interference signal is the useless path signals derived from post-processing the result of the channel estimation.

When the part of the result of the channel estimation corresponding to the user may be determined as useful path signals derived from post-processing the result of the channel estimation and the other part of the result of the channel estimation corresponding to the interference signal may be determined as useless path signals derived from post-processing the result of the channel estimation, a specific implementation may be as the following first to fifth operations,

first operation is to firstly perform a channel estimation on a received signal at the time point.

The second operation is to post-process a result of the channel estimation to determine useful path signals and useless path signals in the result, the latter of which may here be deemed as noise and interference and in an embodiment may be assumed as $\mathbf{h}^n = [h_1^n, h_2^n, ..., h_L^n]$, where L represents the number of useless paths.

Useful path signals and useless path signals may be determined in this operation as in conventional post-processing of a channel estimation result.

The third operation is to calculate an interference space covariance matrix from interference and noise in the result of the channel estimation;

$$\mathbf{R}^n = \mathbf{h}^n (\mathbf{h}^n)^H$$

The fourth operation is to estimate a direction of arrival of the interference signal from the interference space covariance matrix $R^n$ in a DOA estimation method.

The fifth operation is to convert the direction of arrival of the interference signal relative to the antenna into an anticlockwise angle θ of a direction of arrival of the interference signal relative to the north, according to an azimuth of the antenna.

Following the same inventive idea, an embodiment of the invention further provides a device for determining an interference source of mobile communication, and the device addresses the problem with the same idea as that of the foregoing method, so for details of the solution thereof, reference can be made to the embodiments of the method for determining an interference source of mobile communication, and a repeated description thereof will be omitted here.

Fig. 2 is a schematic diagram of a structure of a device for determining an interference source of mobile communication according to an embodiment of the invention, and as illustrated in Fig. 2, the device for determining an interference source may include;

a base station determination module 201 configured to determine a first base station subject to interference;

a time point determination module 202 configured to determine from ISCP of the first base station a frequency point at which a sector of the first base station is subject to interference and a first time point subject to interference at the frequency point;

an interference signal determination module 203 configured to determine a first interference signal of the first base station at the first time point; and

A direction determination module 204 configured to calculate from the first interference signal a first direction of the interference source through a DOA estimation,

In an implementation, firstly the base station determination module 201 determines a first base station subject to interference; then the time point determination module 202 determines from ISCP of the first base station a frequency point at which a sector of the first base station is subject to interference and a first time point subject to interference at the frequency point; next the interference signal determination module 203 determines a first interference signal of the first base station at the first time point; and then the direction determination module 204 may calculate from the first interference signal a first direction of an interference source through a DOA estimation. In this way, a direction of the interference source can be derived, and in order to determine a direction of the interference source more accurately, another direction of interference may further be determined at another base station subject to interference, and an accurate position of the interference source may be determined from the two directions. Then the respective functional modules may further perform the following functions.

The base station determination module 201 is further configured to determine a second base station subject, to interference;

The time point determination module 202 is further configured to determine from ISCP of the second base station a frequency point at which a sector of the second base station is subject to interference and a second time point subject to interference at the frequency point;

The interference signal determination module 203 is further configured to determine a second interference signal of the second base station at the second time point;

The direction determination module 204 is further configured to calculate from the second interference signal a second direction of the interference source through the DOA estimation; and

In order to determine a position of the interference source, the device may further include:

a position determination module 205 configured to determine a position of the interference source from the first direction and the second direction and positions of the first and second base stations.

Moreover, a position of the interference source may further be determined at a set of base stations subject to interference, and then the base station determination module 201 is further configured to determine a set of base stations subject to interference, the number of which large than 2, including the first base station;

The time point determination module 202 is further configured to determine from interference signal code power of each of the set of base stations a frequency point at which a sector of the base station is subject to interference and a time point subject to interference at the frequency point;

The interference signal determination module 203 is further configured to determine an interference signal of the base station at the time point;

The direction determination module 204 is further configured to calculate, from the interference signal through the DOA estimation, a direction of the interference source determined at the base station; and

The position determination module 205 is further configured to determine a position of the interference source from directions of the interference source determined at the respective base stations and positions of the base stations.

In a specific implementation, the time point determination module 202 is further configured to determine a time point at a frequency point subject to the strongest interference in the sector of the base station as the time point at the frequency point subject to interference.

The direction determination module 204 may calculate, from the interference signal through the DOA estimation, a direction of the interference source determined at the base station particularly in the following three approaches:

1) the direction determination module 204 determines an interference space covariance matrix of the interference signal from the interference signal and then calculates a direction of arrival of the interference signal from the interference space covariance matrix through the DOA estimation and determines the direction of arrival as a direction of the interference source;

2) the direction determination module 204 makes a statistic of interference space covariance matrixes of the interference signal at a plurality of time points in a period of time by calculating the interference space covariance matrixes from the interference signal, averages the interference space covariance matrixes resulting from the statistic, and then calculates a direction of arrival of the interference signal from the average of the interference space covariance matrixes through estimating a DOA and determines the direction of arrival as a direction of the interference source; and

3) the direction determination module 204 makes a statistic of interference space covariance matrixes of the interference signal at a plurality of time points in a period of time by calculating the interference space covariance matrixes from the interference signal, calculates a plurality of Directions Of Arrival of the interference signal from the interference space covariance matrixes in the period of time through the DOA estimation respectively, and then averages the plurality of directions of arrival of the interference signal, and determines the average as a direction of the interference source,

In view of and in order to address an accessing service possibly at the selected time point, the device may further include:

a service processing module 206 configured to determine whether there is an accessing service at the time point prior to determining the interference signal of the base station at the time point, and configured, upon determining that there is no accessing service at the time point, to determine the interference signal of the base station at the time point, or upon determining that there is an accessing service at the time point, to await exiting of the service or force the service to exit and then determine the interference signal of the base station at the time point.

Alternatively, the interference signal determination module 203 is further configured to perform a channel estimation on a received signal upon determining that there is an accessing service at the time point, to post-process a result of the channel estimation for determining part of the result of the channel estimation corresponding to a user and the other part of the result of the channel estimation corresponding to the interference signal, and to calculate an interference space covariance matrix from the other part of result of the channel estimation corresponding to the interference signal.

As can be apparent from the foregoing embodiments, the interference source is firstly oriented at a single base station and then positioned at a plurality of base stations in the embodiments of the invention to thereby offer a solution to rapid determination of both a direction of interference and a position of interference in a mobile communication system with intelligent antennas spaced at a small interval so that it is possible to position the interference source rapidly upon occurrence of interference, thus bringing much convenience to a network maintainer and further enhancing a value of utilizing the communication system with intelligent antennas spaced at a small interval,

Those skilled in the art shall appreciate that the embodiments of the invention may be embodied as a method, system or computer program product. Therefore, the invention may be embodied in the form of an all-hardware embodiment, an all-software embodiment or an embodiment of a combination of software and hardware. Furthermore, the invention may be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, device (system) and computer program product according to the embodiments of the invention. It shall be appreciated that respective operations and/or blocks in the flow chart and/or the block diagram and combinations of the operations and/or blocks in the flow chart and/or the block diagram may be embodied in computer program instructions. These computer program instructions may be loaded onto a general-purpose computer, a specific-purpose computer, an embedded processor or a processor of another programmable data processing device to produce a machine so that the instructions executed on the computer or the processor of the other programmable data processing device create means for performing the functions specified in the operation(s) of the flow chart and/or the block(s) of the block diagram.

These computer program instructions may also be stored into a computer readable memory capable of directing the computer or the other programmable data processing device to operate in a specific manner so that the computer program instructions stored in the computer readable memory create an article of manufacture including instructions means which perform the functions specified in the operation(s) of the flow chart and/or the block(s) of the block diagram.

These computer program instructions may also be loaded onto the computer or the other programmable data processing device so that a series of operations are performed on the computer or the other programmable data processing device to create a computer implemented process so that the instructions executed on the computer or the other programmable device provide operations for performing the functions specified in the operation(s) of the flow chart and/or the block(s) of the block diagram.

Although the preferred embodiments of the invention have been described, those skilled in the art benefiting from the essence of the inventive idea may make further modifications and variations to these embodiments. Accordingly, the appended claims are intended to encompass the preferred embodiments as well as all the modifications and variations coming into the scope of the invention.

Evidently those skilled in the art can make various modifications and variations to the invention without departing from the scope of the invention. Thus, the invention is also intended to encompass these modifications and variations provided the modifications and variations come into the scope of the appended claims and their equivalents.

**Claims**

1. A method for determining an interference source of mobile communication, comprising:

    determining a first base station subject to interference;
    determining, from interference signal code power of the first base station, a frequency point at which a sector of the first base station is subject to interference and a first time point subject to interference at the frequency point;
    determining a first interference signal of the first base station at the first time point; and
    calculating, from the first interference signal, a first direction of the interference source through a Direction Of Arrival, DOA, estimation.

2. The method of claim 1, further comprising:

    determining a second base station subject to interference;
    determining, from interference signal code power of the second base station, a frequency point at which a sector of the second base station is subject to interference and a second time point subject to interference at the frequency point;
    determining a second interference signal of the second base station at the second time point;
    calculating, from the second interference signal, a second direction of the interference source through the DOA estimation; and
    determining a position of the interference source from the first direction and the second direction and positions of the first and second base stations.

3. The method of claim 1, further comprising;

    determining a set of base stations subject to interference, the number of which is larger than 2, comprising the first base station;
    determining, from interference signal code power of each of the set of base stations, a frequency point at which a sector of the base station is subject to interference and a time point subject to interference at the frequency point;
    determining an interference signal of the base station at the time point;
    calculating, from the interference signal through the DOA estimation, a direction of the interference source determined at the base station; and
    determining a position of the interference source from directions of the interference source determined at the respective base stations and positions of the base stations.

4. The method of claim 1, 2 or 3, wherein the time point is a time point at a frequency point subject to the strongest interference in the sector of the base station.

5. The method of claim 2 or 3, wherein calculating, from the interference signal, a direction of the interference source through the DOA estimation comprises:

determining an interference space covariance matrix of the interference signal from the interference signal;
calculating a direction of arrival of the interference signal from the interference space covariance matrix through the DOA estimation; and
determining the direction of arrival as the direction of the interference source.

6. The method of claim 2 or 3, wherein calculating, from the interference signal, a direction of the interference source through the DOA estiamtion comprises:

making a statistic of interference, space covariance matrixes of the interference signal at a plurality of time points in a period of time by calculating the interference space covariance matrixes from the interference signal;
averaging the interference space covariance matrixes;
calculating a direction of arrival of the interference signal from the average of the interference space covariance matrixes through the DOA estimation; and
determining the direction of arrival as the direction of the interference source.

7. The method of claim 2 or 3, wherein calculating, from the interference signal, a direction of the interference, source through the DOA estimation comprises:

making a statistic of interference space covariance matrixes of the interference signal at a plurality of time points in a period of time by calculating the interference space covariance matrixes from the interference signal;
calculating a plurality of directions of arrival of the interference signal from the interference space covariance matrixes in the period of time through the DOA estimation, respectively;
averaging the directions of arrival of the interference signal; and
determining the average as the direction of the interference source.

8. The method of claim 1, 2 or 3, further comprising: prior to determining the interference signal of the base station at the time point,
determining whether there is an accessing service at the time point; and
upon determining that there is no accessing service at the time point, determining the interference signal of the base station at the time point; or upon determining that there is an accessing service at the time point, awaiting exiting of the service or forcing the service to exit and then determining the interference signal of the base station at the time point.

9. The method of claim 1, 2 or 3, wherein determining the interference signal of the base station at the time point further comprises:

performing a channel estimation on a received signal upon determining that there is an accessing service at the time point;
post-processing a result of the channel estimation for determining part of the result of the channel estimation corresponding to a user and the other part of the result of the channel estimation corresponding to the interference signal; and
calculating an interference space covariance matrix from the other part of the result of the channel estimation corresponding to the interference signal.

10. A device for determining an interference source of mobile communication, comprising:

a base station determination module configured to determine a first base station subject to interference;
a time point determination module configured to determine from interference signal code power of the first base station a frequency point at which a sector of the first base station is subject to interference and a first time point subject to interference at the frequency point;
an interference signal determination module configured to determine a first interference signal of the first base station at the first time point; and
a direction determination module configured to calculate from the first interference signal a first direction of the interference source through a Direction Of Arrival, DOA, estimation.

11. The device of claim 10, wherein:

the base station determination module is further configured to determine a second base station subject to interference;

the time point determination module is further configured to determine from interference signal code power of the second base station a frequency point at which a sector of the second base station is subject to interference and a second time point subject to interference at the frequency point;

the interference signal determination module is further configured to determine a second interference signal of the second base station at the second time point;

the direction determination module is further configured to calculate from the second interference signal a second direction of the interference source through the DOA estimation; and

the device further includes:

a position determination module configured to determine a position of the interference source from the first direction and the second direction and positions of the first and second base stations.

12. The device of claim 10, wherein:

the base station determination module is further configured to determine a set of base stations subject to interference, the number of which is larger than 2, comprising the first base station;

the time point determination module is further configured to determine interference signal code power of each of the set of base stations a frequency point at which a sector of the base station is subject to interference and a time point subject to interference at the frequency point;

the interference signal determination module is further configured to determine an interference signal of the base station at the time point;

the direction determination module is further configured to calculate from the interference signal through the DOA estimation a direction of the interference source determined at the base station; and

the position determination module is further configured to determine a position of the interference source from directions of the interference source determined at the respective base stations and positions of the base stations.

13. The device of claim 10, 11 or 12, wherein the time point determination module is further configured to determine a time point at a frequency point subject to the strongest interference at the sector of the base station as the time point at the frequency point subject to interference.

14. The device of claim 11 or 12, wherein the direction determination module is further configured to determine an interference space covariance matrix of the interference signal from the interference signal and then calculate a direction of arrival of the interference signal from the interference space covariance matrix through the DOA estimation, and to determine the direction of arrival as a direction of the interference source.

15. The device of claim 11 or 12, wherein the direction determination module is further configured to make a statistic of interference space covariance matrixes of the interference signal at a plurality of time points in a period of time by calculating the interference space covariance matrixes from the interference signal, to average the interference space covariance matrixes resulting from the statistic and then calculate a direction of arrival of the interference signal from the average of the interference space covariance matrixes through the DOA estimation, and to determine the direction of arrival as a direction of the interference source.

16. The device of claim 11 or 12, wherein the direction determination module is further configured to make a statistic of interference space covariance matrixes of the interference signal at a plurality of time points in a period of time by calculating the interference space covariance matrixes from the interference signal, to calculate a plurality of directions of arrival of the interference signal from the interference space covariance matrixes in the period of time through the DOA estimation respectively, to average the plurality of directions of arrival of the interference signal, and to determine the average as a direction of the interference source.

17. The device of claim 10, 11 or 12, further comprising:

a service processing module configured to determine whether there is an accessing service at the time point prior to determining the interference signal of the base station at the time point, and upon determining that there is no accessing service at the time point, to determine the interference signal of the base station at the time point, or upon determining that there is an accessing service at the time point, to await, exiting of the service or force the service to exit and then determine the interference signal of the base station at the time point,

18. The device of claim 10, 11 or 12, wherein the interference signal determination module is further configured to perform a channel estimation on a received signal upon determining that there is an accessing service at the time point, to post-process a result of the channel estimation for determining part of the result of the channel estimation corresponding to a user and the other part of the result of the channel estimation corresponding to the interference signal, and to calculate an interference space covariance matrix from the other part of the result of the channel estimation corresponding to the interference signal.

Determine a first base station subject to interference — 101

Determine from ISCP of the first base station a first time point at a frequency point at which a sector of the first base station is subject to interference — 102

Determine a first interference signal of the first base station at the first time point — 103

Calculate from the first interference signal a first direction of an interference source through a DOA estimation — 104

Fig.1

Base station determination module — 201

Time point determination module — 202

Interference signal determination module — 203

Service processing module — 206

Direction determination module — 204

Position determination module — 205

Fig.2

| | |
|---|---|
| **INTERNATIONAL SEARCH REPORT** | International application No.<br><br>PCT/CN2009/001162 |

**A. CLASSIFICATION OF SUBJECT MATTER**

H04B 17/00 (2006.01) i

According to International Patent Classification (IPC) or to both national classification and IPC

**B. FIELDS SEARCHED**

Minimum documentation searched (classification system followed by classification symbols)

IPC:H04Q,H04W,H04B,H04M

Documentation searched other than minimum documentation to the extent that such documents are included in the fields searched

Electronic data base consulted during the international search (name of data base and, where practicable, search terms used)

CNPAT,CNKI,WPI,EPODOC: interference, locat+, position+, determin+, direction, DOA, smart w antenna, code w power

**C. DOCUMENTS CONSIDERED TO BE RELEVANT**

| Category* | Citation of document, with indication, where appropriate, of the relevant passages | Relevant to claim No. |
|---|---|---|
| Y | CN100361556C （HUAWEI TECHNOLOGIES CO., LTD.） 09 Jan. 2008 (09.01.2008) description page 5, line 10 - page 7, line 17, figures 1,2 | 1-18 |
| Y | CN1929670A （BEIJING XINWEI TELECOM TECHNOLOGY INC.） 14 Mar. 2007(14.03.2007) description page 4, line 27 - page 5, line 8 | 1-18 |
| A | US2002/0065107A1 （HAREL , H. et al.） 30 May 2002(30.05.2002) the whole document | 1-18 |
| A | EP1345337A2 （MATSUSHITA ELECTRIC INDUSTRIAL CO., LTD.） 17 Sep. 2003(17.09.2003) the whole document | 1-18 |

☐ Further documents are listed in the continuation of Box C. ☒ See patent family annex.

| | |
|---|---|
| * Special categories of cited documents:<br><br>"A" document defining the general state of the art which is not considered to be of particular relevance<br><br>"E" earlier application or patent but published on or after the international filing date<br><br>"L" document which may throw doubts on priority claim (S) or which is cited to establish the publication date of another citation or other special reason (as specified)<br><br>"O" document referring to an oral disclosure, use, exhibition or other means<br><br>"P" document published prior to the international filing date but later than the priority date claimed | "T" later document published after the international filing date or priority date and not in conflict with the application but cited to understand the principle or theory underlying the invention<br><br>"X" document of particular relevance; the claimed invention cannot be considered novel or cannot be considered to involve an inventive step when the document is taken alone<br><br>"Y" document of particular relevance; the claimed invention cannot be considered to involve an inventive step when the document is combined with one or more other such documents, such combination being obvious to a person skilled in the art<br><br>"&" document member of the same patent family |
| Date of the actual completion of the international search<br><br>30 Dec. 2009 （30.12.2009） | Date of mailing of the international search report<br><br>**28 Jan. 2010 (28.01.2010)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>YANG Jibin<br><br>Telephone No. (86-10)62413491 |

Form PCT/ISA /210 (second sheet) (July 2009)

## INTERNATIONAL SEARCH REPORT
### Information on patent family members

International application No.

PCT/CN2009/001162

| Patent Documents referred in the Report | Publication Date | Patent Family | Publication Date |
|---|---|---|---|
| CN100361556C | 09.01.2008 | None | |
| CN1929670A | 14.03.2007 | None | |
| US2002/0065107A1 | 30.05.2002 | WO0233997 A2 | 25.04.2002 |
| | | AU9664401 A | 29.04.2002 |
| EP1345337A2 | 17.09.2003 | JP2003264501 A | 19.09.2003 |
| | | CN1444413 A | 24.09.2003 |
| | | US2004204113 A1 | 14.10.2004 |

Form PCT/ISA /210 (patent family annex) (July 2009)